# EUROPÄISCHE PATENTSCHRIFT

(11) **EP 2 383 146 B1**
(45) Veröffentlichungstag und Bekanntmachung des Hinweises auf die Patenterteilung: **01.02.2017**
(21) Anmeldenummer: 10161175.4
(22) Anmeldetag: 27.04.2010
(51) Int. Cl.: B60Q 1/076, F16C 11/06

(54) **Vorrichtung zum Verstellen eines Lichtmoduls**
Device for adjusting a light module
Dispositif de réglage d'un module de lumière

(43) Veröffentlichungstag der Anmeldung: 02.11.2011
(73) Patentinhaber: Hella KGaA Hueck & Co., 59552 Lippstadt (DE)
(72) Erfinder: du Mont, Dirk, 59597 Erwitte (DE)

(56) Entgegenhaltungen:
- EP-A1- 2 112 021
- DE-A1- 10 209 623
- DE-A1- 10 211 816
- FR-A1- 2 702 429
- JP-U- 58 017 704

## Beschreibung

Die Erfindung betrifft eine Vorrichtung zum Verstellen eines Lichtmoduls nach dem Oberbegriff des Patentanspruchs 1.

Aus der EP 2 112 021 A1 ist eine Vorrichtung zum Verstellen eines Lichtmoduls um eine horizontale oder vertikale Achse bekannt, bei der ein Aktor über eine Verstelleinrichtung auf einen Träger des Lichtmoduls derart einwirkt, dass das Lichtmodul um eine horizontale Achse verschwenkbar ist zur dynamischen Einstellung desselben in Abhängigkeit von der aktuellen Fahrsituation. Hierzu ist die Vorrichtung in einem oberen Eckbereich des Trägers in Lichtabstrahlung hinter demselben angeordnet. Die Verstelleinrichtung ist über ein Kugelgelenk mit dem Träger gekoppelt, so dass eine translatorische Bewegung eines fest mit dem Aktor verbundenen Linearstellelementes in eine Verstellrichtung umgewandelt wird in eine Schwenkbewegung des Lichtmoduls. Die Verstelleinrichtung weist zum einen ein erstes Verstellelement mit einem Gewindeschaft und einem Kugelkopf auf, der mit einem Kugelgelenkelement des Trägers gekoppelt ist. Zum anderen weist die Verstelleinrichtung ein zweites Verstellelement auf, das in Gewindeeingriff mit dem ersten Verstellelement ist und auf einer dem Aktor zugewandten Seite eine Pfannenaufnahme aufweist für einen an dem freien Ende des Linearstellelementes angeordneten Kopf desselben. Damit keine unerwünschten Querkräfte in horizontaler Richtung in den Aktor eingeleitet werden können, ist die Pfannenaufnahme in horizontaler Richtung offen ausgebildet, so dass eine relative Ausgleichsbewegung zwischen dem Träger und dem Aktor in horizontaler Richtung erfolgen kann, wenn beispielsweise aufgrund von Bauteiltoleranzen Abweichungen in der relativen Lage zwischen dem Träger und dem Aktor vorliegen. Nachteilig an der bekannten Vorrichtung ist, dass die Verstelleinrichtung mehrere Verstellelemente zur Einleitung einer die Schwenkbewegung des Lichtmoduls hervorrufenden Verstellkraft benötigt. Darüber hinaus ist nur ein begrenzter Ausgleich zur Vermeidung der Einleitung von Querkräften von dem Träger in den Aktor, nämlich in horizontaler Richtung, gewährleistet.

Aus der DE 102 11 816 A1 ist eine Vorrichtung zum Verstellen eines Lichtmoduls um eine horizontale oder vertikale Achse mit einem Aktor bekannt, der mit einem Linearstellelement versehen ist. Mit dem Linearstellelement wirkt der Aktor auf ein einstückiges Verstellelement ein, das mit seinem freien Ende eine offene Drehgelenkaufnahme gelagert ist. Die Drehgelenkaufnahme ermöglicht eine querkraftfreie Verbindung des Aktors mit einem sich an der Drehgelenkaufnahme anschließenden Träger.

Aus der JP 58 177 704 U ist eine Vorrichtung zum Verstellen eines Lichtmoduls mit einem einstückigen Verstellelement bekannt, das über ein erstes Gelenk mit einem Linearstellelement eines Aktors und über ein zweites Gelenk mit einem Träger verbunden ist. Das Verstellelement ist um die durch den Kugelkopf laufende Achse verschwenkbar.

Aufgabe der vorliegenden Erfindung ist es daher, eine Vorrichtung zum Verstellen eines Lichtmoduls um eine horizontale oder vertikale Achse derart weiterzubilden, dass auf einfache Weise und platzsparend eine querkraftfreie Verbindung zwischen einem Aktor und einem fest mit dem Lichtmodul verbundenen Halter gewährleistet ist.

Zur Lösung dieser Aufgabe weist die Erfindung die Merkmale des Patentanspruchs 1 auf.

Der besondere Vorteil der Erfindung besteht darin, dass auf kompakte Weise eine absolut querkraftfreie Verbindung zwischen einem Aktor und einem Halter des Lichtmoduls geschaffen wird. Hierzu ist der Aktor lediglich über ein einziges Verstellelement mit dem Träger gekoppelt, wobei zum einen der Aktor mit dem Verstellelement um eine erste Drehachse verschwenkbar und zum anderen das Verstellelement mit dem Träger um eine senkrecht zur ersten Drehachse verlaufenden zweiten Drehachse verschwenkbar gekoppelt ist. Ein einziges Verstellelement dient somit als Koppelelement zwischen einem Linearstellelement des Aktors und dem Träger.

Nach einer Weiterbildung der Erfindung weist das Verstellelement in einem axialen Bereich desselben eine Drehgelenkaufnahme zur Aufnahme eines freien Endes des Linearstellelementes auf, so dass ein erstes Drehgelenk gebildet wird. Vorteilhaft können somit Querkräfte durch eine Drehbewegung um die erste Drehachse ausgeglichen werden. Da die Drehgelenkaufnahme in Richtung der ersten Drehachse offen ausgebildet ist, können die ansonsten auf das Linearstellelement auftretende Querkräfte beim Schwenkvorgang ausgeglichen werden.

Nach einer Weiterbildung der Erfindung ist das zweite Gelenk als ein Drehgelenk ausgebildet mit einer Bogenfläche, die mit einer geraden Fläche zusammenwirkt. Vorzugsweise weist das Verstellelement eine Bogenfläche auf, die an einer geraden Fläche eines einstückig mit dem Träger verbundenen Lagerauges angreift. Die Bogenfläche verläuft senkrecht zur zweiten Drehachse, so dass Querkräfte durch ein Verdrehen des Verstellelementes um die zweite Drehachse gegenüber dem Träger ausgeglichen werden können.

Nach einer Weiterbildung der Erfindung ist das Verstellelement in einem Lagerauge des Trägers in Verstellrichtung geführt gelagert, wobei es zwischen einem Gelenkelement des Trägers einerseits und einem Kopf des Linearstellelementes andererseits klemmend gelagert ist. Vorteilhaft weist die Vorrichtung somit einen einfachen Aufbau und eine kurze Baulänge und mit wenigen Gelenkelementen auf, die ein Verschwenken des Lichtmoduls bei querkraftfreier Lagerung des Aktors gewährleistet.

Nach einer Weiterbildung der Erfindung ist ein zweites Verstellelement zur manuellen Verstellung des Lichtmoduls um eine horizontale Achse vorgesehen, das sich in einem Gewindeeingriff mit dem Träger befindet. Hierzu weist der Träger auf einer zu den Lageraugen gegenüberliegenden Seite einer Platte eine entsprechende Aufnahme auf. Die Grundeinstellung des Lichtmoduls um eine horizontale Achse kann somit auch manuell mittels eines Werkzeugs erfolgen.

Weitere Vorteile der Erfindung ergeben sich aus den weiteren Unteransprüchen.

Ein Ausführungsbeispiel der Erfindung wird nachfolgend anhand der Zeichnungen näher erläutert.

Es zeigen:

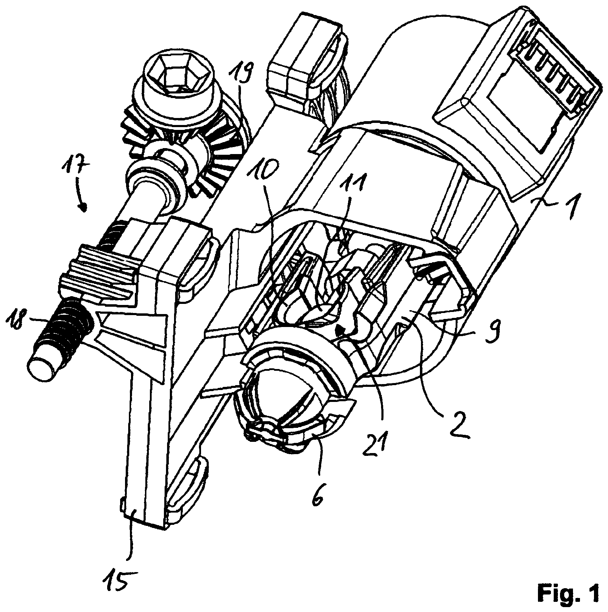

- Fig. 1: eine perspektivische Vorderansicht einer erfindungsgemäßen Verstellvorrichtung,

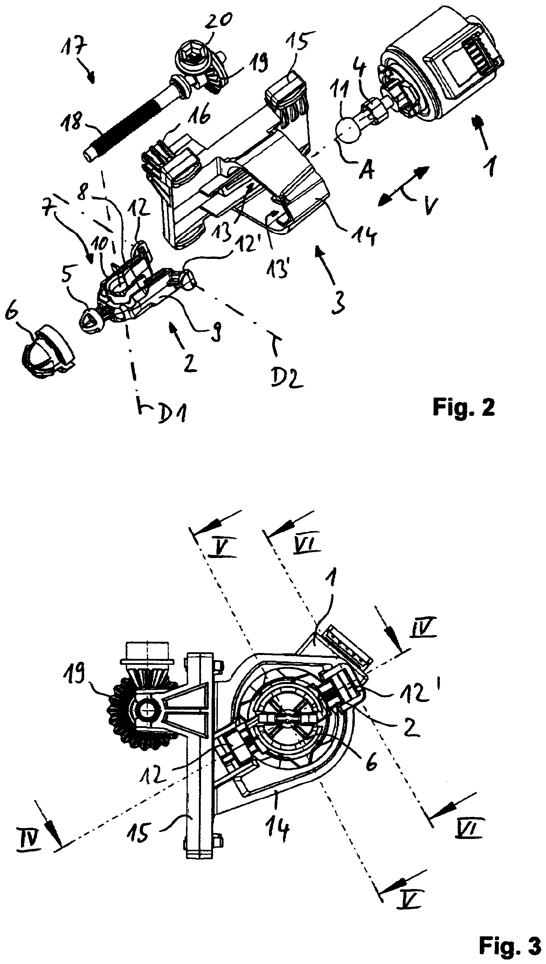

- Fig. 2: eine Explosionsdarstellung der erfindungsgemäßen Vorrichtung,
- Fig. 3: eine Vorderansicht der erfindungsgemäßen Verstelleinrichtung,
- Fig. 4: einen Längsschnitt durch die Vorrichtung gemäß der Schnittlinie IV-IV in Figur 3,
- Fig. 5: einen Längsschnitt durch die Vorrichtung gemäß der Schnittlinie V-V in Figur 3 und
- Fig. 6: einen Längsschnitt durch die Vorrichtung gemäß der Schnittlinie VI-VI in Figur 3.

Eine erfindungsgemäße Vorrichtung zum Verstellen eines Lichtmoduls um eine horizontale oder vertikale Achse weist im Wesentlichen einen Aktor 1, eine mit dem Aktor 1 gekoppelte Verstelleinrichtung 2 sowie einen mit der Verstelleinrichtung 2 gekoppelten Träger 3 auf. Das Lichtmodul ist beispielsweise als ein Scheinwerfer für Kraftfahrzeuge ausgebildet, das eine Lichtquelle und einen demselben zugeordneten Reflektor aufweist zur Erzeugung einer Abblendlichtverteilung und/oder Fernlichtverteilung. Alternativ kann das Lichtmodul als Lichtquelle auch eine oder mehrere LED-Leuchtelemente aufweisen. Das Lichtmodul ist mit einem nicht dargestellten Halter verbunden. Der Träger 3 dient im Wesentlichen zur Aufnahme des Aktors 1 und der Verstelleinrichtung 2. Der Träger 3 kann beispielsweise an einem nicht dargestellten Gehäuse einer so gebildeten Beleuchtungseinrichtung befestigt sein, die gegebenenfalls weitere Lichtmodule aufnimmt.

Der Aktor 1 ist als ein Elektromotor, beispielsweise als ein Schrittmotor ausgebildet, der über ein Linearstellelement 4 verfügt, das in einer Verstellrichtung V (Axialrichtung) bewegbar ist. Der Aktor 1 dient zur dynamischen Einstellung des Lichtmoduls um eine horizontale Achse, so dass in Abhängigkeit von der aktuellen Fahrsituation das Lichtmodul zu dem Fahrzeugvorfeld in vorgegebener Weise ausgerichtet wird. Somit kann die Leuchtweite des Lichtmoduls verändert werden.

Die Verstelleinrichtung ist als ein einstückiges Verstellelement 2 ausgebildet, das über mehrere Gelenkanbindungen verfügt. Auf einer dem Aktor 1 abgewandten Seite weist das Verstellelement 2 einen Kopf 5 auf, der in einer fest mit dem Halter verbundenen Kugelpfanne 6 zur Bildung eines Kugelgelenkes gelagert ist. Hierdurch kann die lineare Bewegung des Verstellelementes 2 in Verstellrichtung V in eine Schwenkbewegung des Lichtmoduls umgewandelt werden.

Der Kopf 5 des Verstellelementes 2 befindet sich in einem Scheitelbereich 7 des Verstellelementes 2, von dem in Richtung des Aktors 1 ein erster Schenkel 8 sowie ein im Wesentlichen parallel zu demselben verlaufender zweiter Schenkel 9 abragen. Die beiden Schenkel 8, 9 verlaufen im Wesentlichen parallel zu einer Verstellachse A des Linearstellelementes 4 bzw. des Verstellelementes 2.

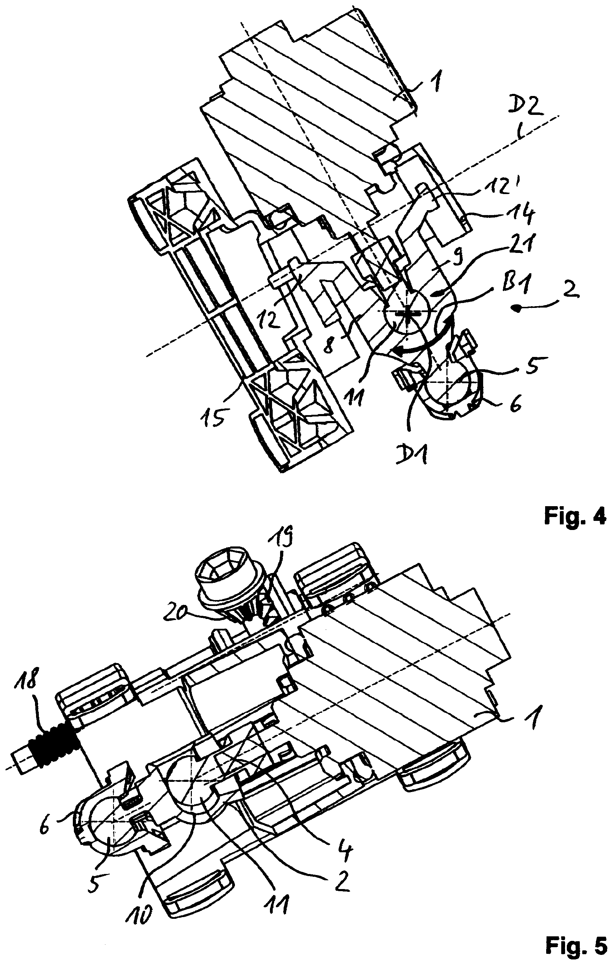

In dem Scheitelbereich 7 des Verstellelementes 2 ist durch einen gegenseitigen Verbindungsabschnitt des ersten Schenkels 8 mit dem zweiten Schenkel 9 eine Drehgelenkaufnahme 10 ausgebildet, in der ein als Kopf ausgebildetes freies Ende 11 des Linearstellelementes 4 gelagert ist. Die Drehgelenkaufnahme 10 ist im Horizontalschnitt bogenförmig ausgebildet, so dass das Linearstellelement 4 um eine in vertikaler Richtung verlaufenden ersten Drehachse D1 verschwenkbar zu dem Verstellelement 2 gelagert ist, siehe Bewegungsrichtung B1 in Figur 4.

Die Drehgelenkaufnahme 10 ist in Richtung der ersten Drehachse D1 offen ausgebildet, so dass die Kugel 11 des Linearstellelementes 4 beim Verschwenken des Lichtmoduls eine Ausgleichsbewegung in Richtung der ersten Drehachse D1 ausführen kann.

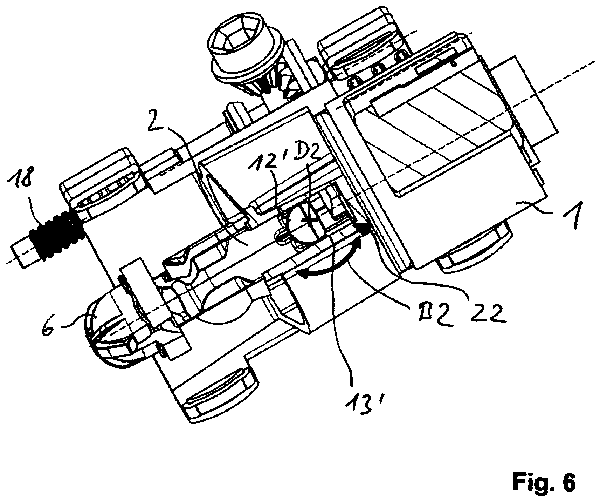

An den freien Enden des ersten Schenkels 8 und des zweiten Schenkels 9 des Verstellelementes 2 sind jeweils in einer vertikalen Ebene verlaufende Bogenflächen 12, 12' vorgesehen, die an einer geraden Fläche 13, 13' eines Lagerauges 14 des Trägers 3 anliegen. Die Bogenflächen 12, 12' sind vorzugsweise kreisbogenförmig ausgebildet und verlaufen entlang eines stumpfen oder überstumpfen Winkelbereiches. Ein Mittelpunkt der gegenüberliegenden Bogenfläche 12, 12' gibt eine zweite Drehachse D2 vor, die senkrecht zur ersten Drehachse D1 verläuft. Vorzugsweise verläuft die zweite Drehachse D2 in horizontaler Richtung, so dass ein zweites Drehgelenk 22 gebildet ist zur Ermöglichung einer Ausgleichsbewegung des Aktors 1 relativ zum Träger 3 um die zweite Drehachse D2, siehe Bewegungsrichtung B2 in Figur 6.

Die Bogenfläche 12, 12' verläuft senkrecht zur zweiten Drehachse D2. Die gerade Fläche 13, 13' verläuft senkrecht zur zweiten Drehachse D2 und in Verstellrichtung V.

Das Lagerauge 14 des Trägers 3 ist hülsenförmig ausgebildet und weist zusätzlich zu der als Führungsfläche dienenden geraden Fläche 13, 13' weitere Führungsflächen auf, so dass das Verstellelement 2 in Verstellrichtung V verschiebbar gelagert ist. Das Lagerauge 14 ist einstückig mit einer vertikalen Platte 15 des Trägers 3 verbunden, die auf einer dem Lagerauge 14 gegenüberliegenden Seite eine vorzugsweise einstückig mit der vertikalen Platte 15 verbundene Verstellhülse 16 mit einem Innengewinde aufweist, die mit einem zweiten Verstellelement 17 in Gewindeeingriff steht. Das zweite Verstellelement 17 weist einen mit der Verstellhülse 16 in Gewindeeingriff stehenden Gewindeschaft 18 sowie ein senkrecht zu demselben verlaufendes Zahnrad 19 auf, das mit einem Ritzel 20 ein Kegelradpaar bildet. Das Ritzel 20 weist eine Aufnahme für ein Werkzeug auf, so dass das zweite Verstellelement 17 um eine parallel zur Verstellachse A verlaufende Achse verdrehbar ist zur statischen Einstellung des Lichtmoduls um die horizontale Achse D2. Zu diesem Zweck ist das zweite Verstellelement 17 axialfest an dem nicht dargestellten Gehäuse der Beleuchtungseinrichtung befestigt. Auch der Aktor 1 ist durch nicht dargestellte Befestigungsmittel axialfest an dem Gehäuse der Beleuchtungseinrichtung befestigt.

Das erste Verstellelement 2 und das zweite Verstellelement 17 sowie das Lagerauge 14 sowie der Träger 3 insgesamt sind vorzugsweise aus einem Kunststoffmaterial hergestellt.

### Bezugszeichenliste

- 1: Aktor
- 2: Verstelleinrichtung
- 3: Träger
- 4: Linearstellelement
- 5: Kopf
- 6: Kugelpfanne
- 7: Scheitelbereich
- 8: erster Schenkel
- 9: zweiter Schenkel
- 10: Drehgelenkaufnahme
- 11: freies Ende
- 12, 12': Bogenfläche
- 13, 13': gerade Fläche
- 14: Lagerauge
- 15: Platte
- 16: Verstellhülse
- 17: erstes Verstellelement
- 18: Gewindeschaft
- 19: Zahnrad
- 20: Ritzel
- 21: erstes Drehgelenk
- 22: zweites Drehgelenk

- V: Verstellrichtung
- A: Verstellachse
- D1: erste Drehachse
- D2: zweite Drehachse
- B1: Bewegungsrichtung
- B2: Bewegungsrichtung

## Patentansprüche

1. Vorrichtung zum Verstellen eines Lichtmoduls um eine horizontale oder vertikale Achse mit einem Träger (3) zur Aufnahme eines Aktors (1), mit einer Verstelleinrichtung (2) und mit dem Aktor (1), wobei
- der Aktor (1) mit einem in einer Verstellrichtung (V) bewegbaren Linearstellelement (4) auf die Verstelleinrichtung (2) einwirkt,
- die Verstelleinrichtung (2) über ein Kugelgelenk (5, 6) mit einem Halter des Lichtmoduls verbindbar ist,
- die Verstelleinrichtung als ein einstückiges Verstellelement (2) ausgebildet ist,
- das Verstellelement (2) über ein erstes Gelenk (21) an einem freien Ende (11) des Linearstellelements (4) gelagert ist, und
- das Verstellelement (2) über ein zweites Gelenk (22) mit dem Träger (3) verbunden ist,
**dadurch gekennzeichnet, dass** das Verstellelement (2), das Linearstellelement (4) und der Träger (3) derart ausgebildet sind, dass
- das Verstellelement (2) um eine senkrecht zu der Verstellrichtung (V) verlaufende erste Drehachse (D1) eines ersten Drehgelenks (21) verschwenkbar gelagert ist und
- das Verstellelement (2) um eine senkrecht zur ersten Drehachse (D1) verlaufende zweite Drehachse (D2) eines zweiten Drehgelenks (22) verschwenkbar gelagert ist.

2. Vorrichtung nach Anspruch 1, **dadurch gekennzeichnet, dass** das Verstellelement (2) in einem axialen Bereich eine Drehgelenkaufnahme (10) zur Aufnahme eines freien Endes (11) des Linearstellelementes (4) aufweist zur Bildung des ersten Drehgelenkes (21), wobei die Drehgelenkaufnahme (10) in Richtung der ersten Drehachse (D1) offen ausgebildet ist.

3. Vorrichtung nach Anspruch 1 oder 2, **dadurch gekennzeichnet, dass** das zweite Drehgelenk (22) in einem Abstand zu der Verstellachse (A) des Linearstellelementes (4) angeordnet ist und dass zur Bildung des zweiten Drehgelenkes (22) eine senkrecht zur zweiten Drehachse (D2) verlaufende Bogenfläche (12, 12') an einer senkrecht zur zweiten Drehachse (D2) und in Verstellrichtung (V) verlaufende gerade Fläche (13, 13') anliegt.

4. Vorrichtung nach einem der Ansprüche 1 bis 3, **dadurch gekennzeichnet, dass** die gerade Fläche (13, 13') als eine in Verstellrichtung (V) verlaufende Führungsfläche ausgebildet ist, die innerhalb eines Lagerauges (14) des Trägers (3) verläuft, und wobei das Verstellelement (2) in dem Lagerauge (14) in Verstellrichtung (V) geführt gelagert ist.

5. Vorrichtung nach Anspruch 3 oder 4, **dadurch gekennzeichnet, dass** das Verstellelement (2) symmetrisch zu einer die erste Drehachse (D1) und/oder die zweite Drehachse (D2) aufnehmenden Längsmittelebene desselben ausgebildet ist mit einem ersten Schenkel (8) und mit einem zweiten Schenkel (9), die in einem Scheitelbereich (7) zusammenlaufen, wobei in dem Scheitelbereich (7) die Drehgelenkaufnahme (10) für das Linearstellelement (4) und ein Kopf (5) zur Lagerung des Verstellelementes (2) in einer Kugelpfanne (6) eines das Lichtmodul haltendenden Halters einerseits angeordnet sind und wobei dem ersten Schenkel (8) eine erste Bogenfläche (12) und dem zweiten Schenkel (9) eine zweite Bogenfläche (12') andererseits zugeordnet sind.

6. Vorrichtung nach einem der Ansprüche 3 bis 5, **dadurch gekennzeichnet, dass** die erste Bogenfläche (12) und die zweite Bogenfläche (12') jeweils an einem freien Endes des ersten Schenkel (8) bzw. des zweiten Schenkels (9) angeordnet sind.

7. Vorrichtung nach einem der Ansprüche 3 bis 6, **dadurch gekennzeichnet, dass** der im Scheitelbereich (7) angeordnete Kopf (5) des Verstellelementes (2) mit einem Gelenkelement (6) des Halters verbunden ist zur Bildung eines Kugelgelenkes.

8. Vorrichtung nach einem der Ansprüche 5 bis 7, **dadurch gekennzeichnet, dass** der Aktor (1) als ein Elektromotor ausgebildet ist, der ortsfest angeordnet ist.

9. Vorrichtung nach einem der Ansprüche 1 bis 8, **dadurch gekennzeichnet, dass** ein zweites Verstellelement (17) in einem Gewindeeingriff mit dem Träger (3) steht zur manuellen Verstellung des Lichtmoduls um die horizontale Achse (D1).

## Claims

1. Apparatus for
adjusting a light module around a horizontal or vertical axis with a carrier (3) for holding an actuator (1), with an adjustment device (2) and with the actuator (1), where
- the actuator (1) acts on the adjustment device (2) with a linear adjusting element (4) that can be moved in an adjustment direction (V)
- the adjustment device (2) can be connected to a holder of the light module via a ball joint (5, 6)
- the adjustment device is embodied as a one-piece adjustment element (2),
- the adjustment element (2) is supported by a first joint (21) at a free end (11) of the linear adjustment element (4) and
- the adjustment element (2) is connected to the carrier (3) via a second joint (22),
wherein the adjustment element (2), the linear adjustment element (4) and the carrier (3) are embodied such that
- the adjusting element (2) is swivel-mounted to a first rotary axis (D1) of a first swivel joint (21) running perpendicular to the adjustment device (V) and
- the adjusting element (2) is swivel-mounted to a second rotary axis (D1) running perpendicular to the first rotary axis (D2) of a second swivel joint (22).

2. Apparatus in accordance with Claim 1, wherein the adjustment element (2) has a rotary joint holder (10) in axial area for holding a free end (11) of the linear adjustment element (4) for forming the first rotary joint (21), where the rotary joint holder (10) has an open embodiment towards the first rotary axis (D1).

3. Apparatus in accordance with Claim 1 or 2, wherein the second rotary joint (22) is arranged at a distance to the adjustment axis (A) of the linear adjustment element (4) and that for forming the second rotary joint (22), a curved surface (12, 12') that runs perpendicular to the second rotary axis (D2) abuts a straight surface (13, 13') that runs perpendicular to the second rotary axis (D2) and in the adjustment direction (V).

4. Apparatus in accordance with Claims 1 to 3, wherein the straight surface (13, 13') is embodied as a guide surface that runs in the adjustment direction (V) which runs within a bearing eye (14) of the carrier (3), and where the adjustment element (2) is supported by the bearing eye (14) guided in the adjustment direction (V).

5. Apparatus in accordance with Claim 3 or 4, wherein the adjustment element (2) is embodied symmetrical to a longitudinal center plane of the same that holds the first rotary axis (D1) and/or the second rotary axis (D2) with a first leg (8) and a second leg (9), which join in an apex (7), where in the apex (7), the following are arranged: the rotary joint holder (10) for the linear adjustment element (4) and a head (5) for holding the adjustment element (2) in a ball cup (6) of a holder that holds the light module and where a first curved surface (12) is assigned to the first leg (8) and a second curved surface (12') is assigned to the second leg (9).

6. Apparatus in accordance with one of the Claims 3 to 5, wherein the first curved surface (12) and the second curved surface (12') are each arranged at a free end of the first leg (8) and the second leg (9).

7. Apparatus in accordance with one of the Claims 3 to 6, wherein the head (5) of the adjustment element (2) arranged in the apex (7) is connected to a joint element (6) of the holder to form a ball joint.

8. Apparatus in accordance with one of the Claims 5 to 7, wherein the actuator (1) has an embodiment as an electric motor arranged in a fixed location.

9. Apparatus in accordance with one of the Claims 1 to 8, wherein
a second adjustment element (17) is in thread engagement with the carrier (3) for manual adjustment of the light module around the horizontal axis (D1).

## Revendications

1. Dispositif pour le réglage d'un module d'éclairage autour d'un axe horizontal ou vertical, avec un porteur (3) pour le logement d'un actionneur (1), avec un dispositif de réglage (2) et avec l'actionneur (1),
- l'actionneur (1) agissant sur le dispositif de réglage (2) par un actionneur linéaire (4) déplaçable dans un sens de réglage (V),
- le dispositif de réglage (2) pouvant être lié à un support du module d'éclairage par le biais d'une articulation à rotule (5, 6),
- le dispositif de réglage étant réalisé en tant qu'un élément de réglage (2) d'une seule pièce,
- l'élément de réglage (2) étant monté sur palier par une première articulation (21) à une extrémité libre (11) de l'actionneur linéaire (4) et
- l'élément de réglage (2) étant relié au porteur (3) par une deuxième articulation (22),
**caractérisé en ce que**
l'élément de réglage (2), l'actionneur linéaire (4) et le porteur (3) sont réalisés de telle manière que
- l'élément de réglage (2) soit monté sur palier autour d'un premier axe de rotation (D1) d'une première articulation pivotante (21) perpendiculairement au sens de réglage (V) et
- l'élément de réglage (2) soit monté sur palier autour d'un deuxième axe de rotation (D2) d'une deuxième articulation pivotante (22) perpendiculairement au premier axe de rotation (D1).

2. Dispositif selon la revendication 1, **caractérisé en ce que** dans une zone axiale l'élément de réglage (2) présente un logement d'une articulation pivotante (10) destiné à loger une extrémité libre (11) de l'actionneur linéaire (4) pour former une première articulation pivotante (21), le logement de l'articulation pivotante (10) étant ouvert en direction du premier axe de rotation (D1).

3. Dispositif selon la revendication 1 ou 2, **caractérisé en ce que** la deuxième articulation pivotante (22) est disposée à distance par rapport à l'axe de réglage (A) de l'actionneur linéaire (4) et que pour former la deuxième articulation pivotante (22) une surface en forme d'arc (12, 12') perpendiculaire au deuxième axe de rotation (D2) est en appui avec une surface plane (13, 13') perpendiculaire au deuxième axe de rotation (D2) et au sens de réglage (V).

4. Dispositif selon l'une des revendications 1 à 3, **caractérisé en ce que** la surface plane (13, 13') est réalisée en tant que surface de guidage s'étendant au sens de réglage (V) qui s'étend à l'intérieur d'un oeil du palier (14) du porteur (3) et l'élément de réglage (2) étant monté par guidage dans l'oeil du palier (14) au sens de réglage (V).

5. Dispositif selon la revendication 3 ou 4, **caractérisé en ce que** l'élément de réglage (2) est symétrique par rapport à un plan médian longitudinal recevant le premier axe de rotation (D1) et/ou le deuxième axe de rotation (D2) de celui-ci, avec une première branche (8) et avec une deuxième branche (9) qui convergent dans une zone de sommet (7), dans la zone de sommet (7) étant disposés d'un côté le logement de l'articulation pivotante (10) pour l'actionneur linéaire (4) et une tête (5) pour le positionnement de l'élément de réglage (2) dans un coussinet sphérique (6) d'un support portant le module d'éclairage et de l'autre côté une première surface en forme d'arc (12) étant affectée à la première branche (8) et une deuxième surface en forme d'arc (12') étant affectée à la deuxième branche (9).

6. Dispositif selon l'une des revendications 3 à 5, **caractérisé en ce que** la première surface en forme d'arc (12) et la deuxième surface en forme d'arc (12') sont disposées chaque fois à une extrémité libre de la première branche (8) ou de la deuxième branche (9).

7. Dispositif selon l'une des revendications 3 à 6, **caractérisé en ce que** la tête (5) de l'élément de réglage (2) disposée dans la zone de sommet (7) est reliée à un élément d'articulation (6) du support pour former une articulation sphérique.

8. Dispositif selon l'une des revendications 5 à 7, **caractérisé en ce que** l'actionneur (1) est conçu en tant que moteur électrique disposé de manière fixe.

9. Dispositif selon l'une des revendications 1 à 8, **caractérisé en ce qu**'un deuxième élément de réglage (17) est en prise par filetage avec le porteur (3) pour le réglage manuel du module d'éclairage autour de l'axe horizontal (D1).
